# DEMANDE DE BREVET EUROPEEN

(11) **EP 2 264 880 A2**
(43) Date de publication de la demande: **22.12.2010**
(21) Numéro de dépôt: 10176750.7
(22) Date de dépôt: 29.04.2002
(51) Int. Cl.: H02M 3/335

(54) **Redresseur synchrone auto-commandé**

(30) Priorité: 25.06.2001 FR 0108336; 15.11.2001 FR 0114792
(62) Demande divisionnaire de: 02291075.6
(71) Demandeur: AEG Power Solutions B.V., 1161 AG Zwanenburg (NL)
(72) Inventeur: Diallo, Almadidi, 35235, Thorigne-Fouillard (FR); Puisieux, Philippe, 22300, Lannion (FR); Ceunebrock, Patrick, 22560, Pleumeur Bodou (FR)
(74) Mandataire: David, Alain

(57) **Abrégé**

La présente invention concerne un circuit de protection de grille (28, 29) d'un transistor MOSFET de puissance (11, 14).

Il comprend un élément limiteur ayant un seuil de conduction en tension faible dont la commande est obtenue par son câblage propre, une première partie de cet élément limiteur étant raccordée à la grille du MOSFET de puissance (11, 14) associé et montée en parallèle avec un élément diviseur et une seconde partie étant raccordée à la source du MOSFET de puissance (11, 14) associé.

## Description

L'invention concerne un redresseur synchrone auto-commandé. L'invention concerne en particulier un redresseur synchrone auto-commandé utilisé dans un convertisseur AC/DC ou DC/DC.

L'invention concerne un redresseur synchrone, commandé par enroulement couplé ou auto-commandé en transfert direct d'énergie symétrique ou asymétrique. Dans la suite du texte, l'expression « redresseur synchrone auto-commandé » désigne aussi « redresseur synchrone commandé par enroulement couplé ».

On connaît des systèmes de conversion asymétriques comprenant une source de tension initiale débitant dans un primaire de transformateur, monté en série avec un interrupteur principal. Le secondaire du transformateur est monté en cascade avec un redresseur synchrone auto-commandé et un filtre. La sortie du filtre délivre une tension continue contrôlée dans une application. Dans ce type de chaîne de conversion, le redresseur synchrone auto-commandé a pour but de
- délivrer à l'application, à travers le filtre, l'énergie transférée par le transformateur dans la période conductrice de l'interrupteur principal, et
- bloquer le transfert dans la période non-conductrice de l'interrupteur principal, l'application étant alimentée par la bobine du filtre durant cette période non-conductrice, de l'interrupteur principal.

Le redresseur synchrone auto-commandé est constitué, en asymétrique, de deux MOSFETs agencés de manière à assurer les deux fonctions ci-dessus énumérées afin de réduire les pertes du redresseur. Par exemple le redresseur synchrone auto-commandé comprend, en asymétrique :
- une première et une seconde sortie de redresseur,
- un premier transistor MOSFET connecté entre la première extrémité de secondaire de transformateur et la première sortie du redresseur, et ayant une connexion de grille à la seconde extrémité du secondaire du transformateur,
- un second transistor MOSFET connecté entre la première sortie du redresseur et la seconde sortie du redresseur, et ayant une connexion de grille à la première extrémité du secondaire du transformateur.

La tension au secondaire du transformateur commande les deux MOSFETs.

Dans un souci économique et d'encombrement réduit, les constructeurs souhaitent développer des convertisseurs offrant au sein d'un même produit, une large plage de tension d'entrée et des tensions de sortie variées. Cela implique une fréquence de fonctionnement élevée et des variations de tension, au secondaire du transformateur, proportionnelles à celles de l'entrée. Or, la tension au secondaire du transformateur constitue aussi le signal de grille des MOSFETs du redresseur. Les tensions applicables aux grilles des MOSFETs sont limitées. Si une tension trop importante est appliquée sur la grille d'un MOSFET, celui-ci peut être détruit ou générer, le cas échéant, des pertes de commutations rédhibitoires. Ces pertes sont proportionnelles à la fréquence de découpage.

Pour protéger les MOSFETs d'une surtension de grille, il est connu de monter les connexions de grille en série avec un pont diviseur de tension passif. Cependant, la présence de ce diviseur de tension constitue une source de pertes importantes lorsque la tension au secondaire du transformateur est trop faible ou trop élevée. En outre, cette solution présente l'inconvénient de pertes de commutations significatives liées aux tensions de polarisation inverses des MOSFETs de redressement synchrone.

Il peut être envisagé un redresseur synchrone auto-commandé présentant une protection de grille, autorisant une grande variation de la tension d'entrée, tout en ayant des performances optimales pour les courants et tensions de sortie.

Une solution antérieure concerne, en particulier, un redresseur synchrone auto-commandé connecté entre un enroulement secondaire de transformateur, ayant une première et une seconde extrémité de transformateur, dans le cas asymétrique, et un filtre LC ayant une première et une seconde entrée de filtre, ledit redresseur synchrone auto-commandé comprenant en asymétrique:
- une première et une seconde entrée de redresseur connectées respectivement à la première et la seconde extrémité de transformateur,
- une première et une seconde sortie de redresseur, la seconde sortie de redresseur étant connectée à la seconde entrée de redresseur et à un filtre de sortie,
- un transistor MOSFET direct connecté entre la première entrée de redresseur et la première sortie de redresseur et ayant une connexion de grille connectée à la seconde entrée de redresseur à travers un circuit de protection de grille,
- un transistor MOSFET de roue libre connecté entre la première sortie de redresseur et la seconde sortie de redresseur et ayant une connexion de grille connectée à la première entrée de redresseur à travers un circuit de protection de grille.

Ici, chaque circuit de protection de grille constitue avec la capacité grille-source, intrinsèque ou additionnelle, du MOSFET correspondant un pont diviseur commandé, et le redresseur comprend un dispositif de commande, ledit dispositif de commande recevant un signal d'entrée proportionnel à la tension à l'entrée du redresseur et émettant des signaux de sortie pour commander les circuits de protection de grille. Il est d'usage de disposer en série avec le circuit de protection de grille de faibles impédances, ce qui ne modifie pas le principe décrit.

L'avantage d'une telle solution résulte du contrôle dynamique de la tension de grille permettant, en fonction de la tension du secondaire du transformateur ou toute tension équivalente à celle d'entrée, de courtcircuiter ou non le pont diviseur de tension. Ainsi, quelle que soit l'amplitude de la tension entrant dans le redresseur synchrone auto-commandé, les tensions de grille des MOSFETs sont optimisées pour limiter les pertes et conserver une dynamique de commutation optimale. De ce fait, pour les grandes variations de tension d'entrée, il est possible, à tension de sortie égale, à volume égal, de faire passer une puissance plus importante dans un convertisseur incluant un redresseur à MOSFET auto-commandé.

Cependant, ce dispositif efficace pour réduire les pertes de commutation et celles de conduction s'avère encombrant et coûteux dès lors que la plage de tension d'entrée est normale ou pour des tensions de sortie très basses.

La présente invention résout ces problèmes tout en permettant de limiter les tensions inverses des MOSFETs de redressement synchrone, dans leur phase de blocage, à la tension de seuil de conduction d'un élément limiteur tout en assurant une bonne polarisation des grilles dans les phases de conduction respectives.

Pour ce faire, conformément à l'invention, le circuit de protection de grille d'un transistor MOSFET de puissance comprend un élément limiteur ayant un seuil de conduction en tension faible dont la commande est obtenue par son câblage propre, une première partie de cet élément limiteur étant raccordée, à la grille du MOSFET de puissance associé et montée en parallèle avec un élément diviseur et une seconde partie étant raccordée, à la source du MOSFET de puissance associé.

Selon un premier mode de réalisation, ledit élément limiteur est un transistor, dont la commande est obtenue par le câblage grille-source dudit transistor, la source étant raccordée, à la grille du MOSFET de puissance associé et la grille étant raccordée, , à la source du MOSFET de puissance associé.

Avantageusement, ledit transistor est un transistor MOS.

Selon un second mode de réalisation, ledit élément limiteur comprend deux diodes, une première diode étant raccordée, à la grille du MOSFET de puissance associée et montée en parallèle avec ledit élément diviseur et une seconde diode étant montée, en parallèle entre la source et la grille du MOSFET de puissance associé.

Et de préférence, ladite première diode est une diode de signal et ladite seconde diode est une diode de protection.

L'invention concerne un redresseur synchrone auto-commandé connecté entre un enroulement secondaire de transformateur ayant une première et une seconde extrémité de transformateur, et un filtre LC ayant une première et une seconde entrée de filtre, ledit redresseur synchrone auto-commandé comprenant :
- une première et une seconde entrée de redresseur connectées respectivement à la première et la seconde extrémité de transformateur
- une première et une seconde sortie de redresseur, la seconde sortie de redresseur étant connectée à la seconde entrée de redresseur,
- un transistor MOSFET direct, ou tout élément à commande en tension, connecté entre la première entrée de redresseur et la première sortie de redresseur et ayant une connexion de grille,
- un transistor MOSFET de roue libre, ou tout élément à commande en tension, connecté entre la première sortie de redresseur et la seconde sortie de redresseur et ayant une connexion de grille,
au moins l'une des connexions de grille étant connectée à une entrée de redresseur à travers un circuit de protection de grille,
**caractérisé en ce que** ledit circuit de protection de grille comprend un élément limiteur ayant un seuil de conduction en tension faible dont la commande est obtenue par son câblage propre, une première partie de cet élément limiteur étant raccordée, à la grille du MOSFET de puissance associé et montée en parallèle avec un élément diviseur et une seconde partie étant raccordée à la source du MOSFET de puissance associé.

Selon un premier mode de réalisation, ledit élément limiteur est un transistor, dont la commande est obtenue par le câblage grille-source dudit transistor, la source étant raccordée à la grille du MOSFET de puissance associé et la grille étant raccordée à la source du MOSFET de puissance associé.

Avantageusement, ledit transistor est un transistor MOS.

Selon un second mode de réalisation, ledit élément limiteur comprend deux diodes, une première diode étant raccordée, à la grille du MOSFET de puissance associée et montée en parallèle avec ledit élément diviseur et une seconde diode étant montée, en parallèle entre la source et la grille du MOSFET de puissance associé.

Et de préférence, ladite première diode est une diode de signal et ladite seconde diode est une diode de protection.

Avantageusement, ledit câblage dudit élément limiteur comporte une impédance série.

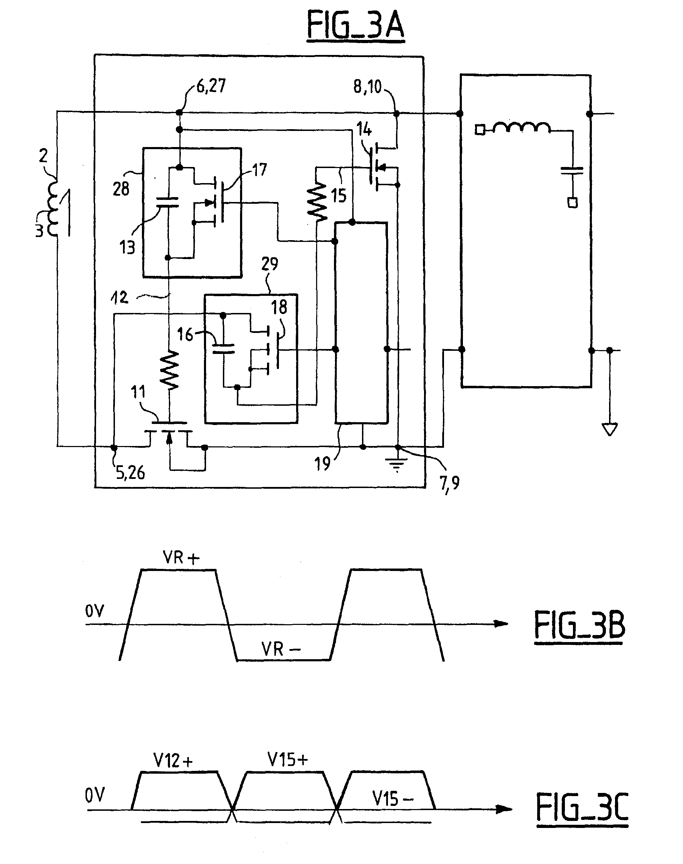

Le circuit de protection peut être raccordé au redresseur à travers un second diviseur placé en série avec le premier. Ce second diviseur peut être une protection active de la grille comme visible sur les figures 3A.

Le redresseur peut être câblé sur un secondaire de transformateur à point milieu.

L'invention est décrite ci-après plus en détail à l'aide de figures ne représentant qu'un mode de réalisation préféré de l'invention.

La figure 1A représente un diagramme schématique du secondaire d'un redresseur synchrone auto-commandé et les figures 1B et 1C les diagrammes de tension correspondants, selon un premier mode de réalisation antérieur.

La figure 2A représente un diagramme schématique du secondaire d'un redresseur synchrone auto-commandé avec diviseur capacitif et les figures 2B et 2C les diagrammes de tension correspondants selon un second mode de réalisation antérieur.

La figure 3A représente un diagramme schématique du secondaire d'un redresseur synchrone auto-commandé avec protection active des grilles et les figures 3B et 3C les diagrammes de tension correspondants, selon un troisième mode de réalisation antérieur.

La figure 4A représente un diagramme schématique du secondaire d'un redresseur synchrone auto-commandé avec protection active des grilles et les figures 4B et 4C les diagrammes de tension correspondants, selon le premier mode de réalisation de l'invention.

La figure 5A représente un diagramme schématique du secondaire d'un redresseur synchrone auto-commandé avec protection active des grilles et les figures 5B et 5C les diagrammes de tension correspondants, selon le second mode de réalisation de l'invention.

Dans tous les cas ci-dessus, les signaux de commande représentés correspondent à ceux obtenus d'un redressement avec démagnétisation active. Pour les démagnétisations résonantes, seules les formes d'ondes sont différentes, dans la phase de conduction du MOSFET de roue libre.

Dans ce qui suit, les éléments communs aux différents modes de réalisation portent la même référence et, dans un souci de clarté, les impédances séries seront assimilées à des court-circuits.

L'invention concerne un redresseur synchrone auto-commandé symétrique ou asymétrique.

Dans le cas asymétrique représenté sur les figures, le redresseur synchrone auto-commandé est monté entre le secondaire 2 d'un transformateur 3 et un filtre LC 4.

Plus particulièrement, le redresseur synchrone auto-commandé asymétrique comprend une première et une seconde entrée de redresseur 26, 27 connectée à une première et une seconde extrémités de transformateur 5, 6 de l'enroulement secondaire de transformateur 3 et une première et une seconde sorties de redresseur 9, 10 connectées à une première et une seconde entrées de filtre 7, 8 du filtre LC 4. La seconde sortie de redresseur 10 est connectée à la seconde entrée de redresseur 27.

Le redresseur synchrone auto-commandé asymétrique comprend classiquement :
- un transistor MOSFET direct 11 connecté entre la première entrée de redresseur 26 et la première sortie de redresseur 9 ; la connexion de grille 12 du transistor MOSFET 11 est connectée à la seconde entrée de redresseur 27,
- un transistor MOSFET de roue libre 14 connecté entre la première sortie de redresseur 9 et la seconde sortie de redresseur 10; la connexion de grille 15 du transistor MOSFET de roue libre 14 est connectée à la première entrée de redresseur 26.

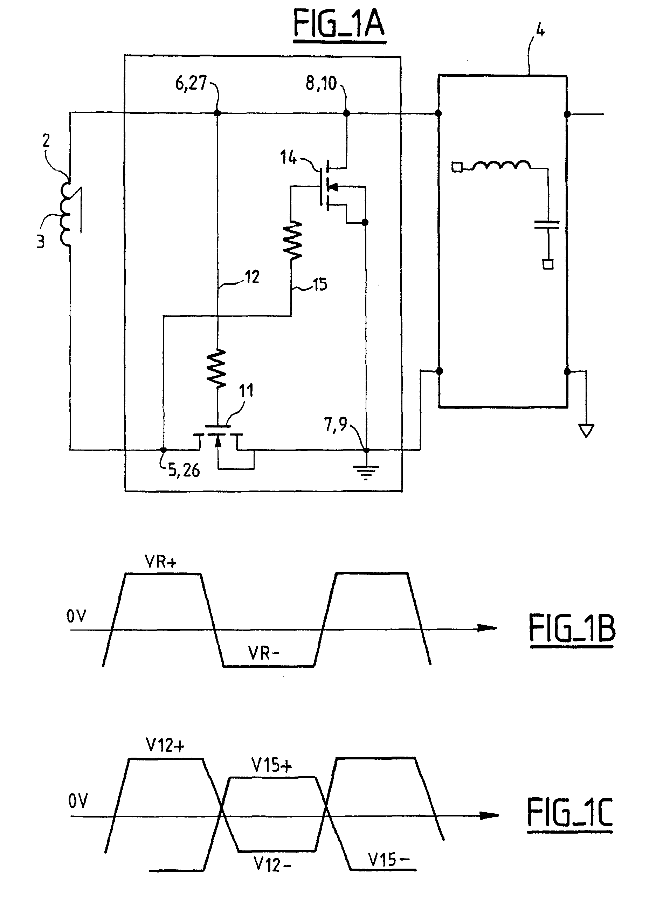

Selon le mode de réalisation connu représenté sur la figure 1A, les connexions de grille 12, 15 ne comportent pas de circuit de protection.

La tension d'entrée du redresseur 1, représentée sur les figures 1B ,...4B, présente, suivant les topologies, des formes diverses qui sont assimilables dans la phase directe, par commodité, à un signal carré, VR, de rapport cyclique ou fréquence modulable, et dont les amplitudes sont variables en fonction de la gamme de tension choisie pour le convertisseur. Cette tension d'entrée du redresseur 1 est en fait la tension issue du secondaire 2 du transformateur 3, et outre le fait d'alimenter l'application, elle sert aussi de signal de commande des MOSFET de puissance 11, 14.

Si l'on considère la tension VR, d'amplitude variable, aux bornes du transformateur 3 représentée sur la figure 1B, quand elle polarise positivement la grille 12, la grille 15 est polarisée négativement et inversement. Ainsi, dans les phases de conduction respectives, la tension de la grille 12, V12+, recopie VR+ et la tension de la grille 15, V15+, recopie VR- en valeur absolue. A une tension VR+ positive et maximale (ou minimale) sur la grille 12, correspond une tension VR- positive mais d'amplitude minimale (ou maximale) sur la grille 15, comme visible sur la figure 1C.

Les tensions de commande sont proportionnelles à l'image de la tension d'entrée VR.

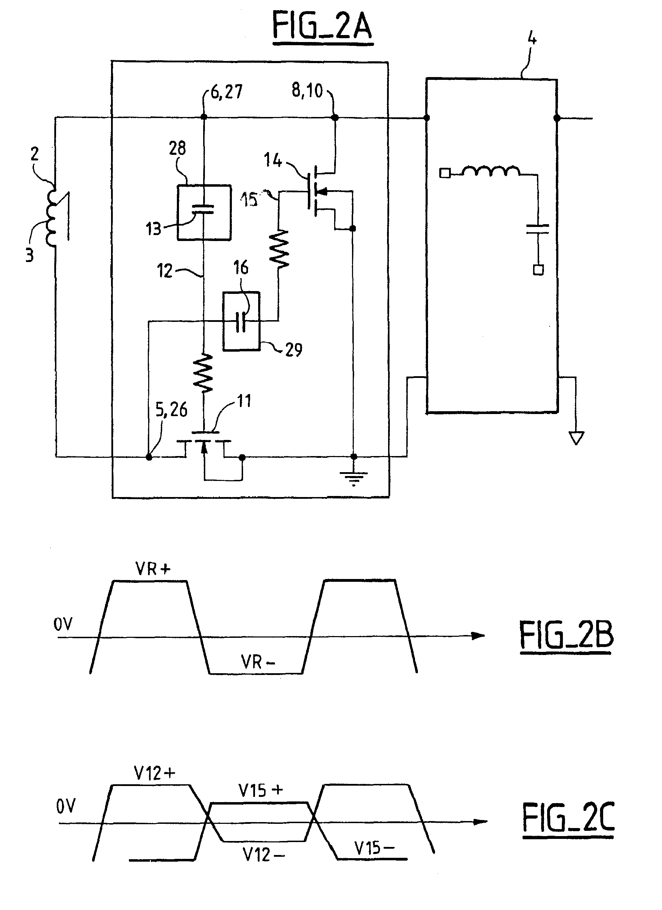

Pour protéger les MOSFETs d'une surtension de grille, il est connu de monter les connexions de grille en série avec un pont diviseur de tension passif comme représenté sur la figure 2A.

La connexion de grille 12 est montée en série avec un circuit de protection de grille 28 constitué d'une capacité 13 et la connexion de grille 15 est monté en série avec un circuit de protection de grille 29 constitué d'une capacité 16.

Si l'on considère la tension VR, d'amplitude variable, aux bornes du transformateur 3 représentée sur la figure 2B, quand elle polarise positivement la grille 12, la grille 15 est polarisée négativement et inversement. Ainsi, dans les phases de conduction respectives, la tension de la grille 12, V12+, recopie une fraction de VR+ et la tension de la grille 15, V15+, recopie une fraction de VR- en valeur absolue. A une tension VR+ positive et maximale (ou minimale) sur la grille 12, correspond une tension VR- positive mais d'amplitude minimale (ou maximale) sur la grille 15, comme visible sur la figure 2C.

Les tensions de commande sont donc réduites sur les grilles grâce à cet agencement de protection avec diviseur capacitif mais l'optimisation est délicate et des tensions négatives importantes existent en couplage capacitif.

Selon le mode de réalisation représentée sur la figure 3A, chaque circuit de protection de grille 28, 29 comprend, un élément diviseur 13, 16 monté en parallèle avec un interrupteur 17, 18 ayant une position ouverte et une position fermée.

Cet élément diviseur 13, 16 constitue avec le condensateur intrinsèque ou l'impédance placée entre la grille et la source du MOSFET, un pont diviseur non dissipatif.

De plus, le redresseur comprend un dispositif de commande 19 des interrupteurs 17, 18. Ce dispositif de commande 19 reçoit un signal d'entrée proportionnel à la tension à l'entrée du redresseur 1 et émet des signaux de sortie pour commander les interrupteurs 17, 18.

Le dispositif de commande 19 comprend en outre des moyens pour générer au moins une valeur seuil, et des moyens de comparaison du signal d'entrée avec la valeur seuil. Les signaux de sortie sont fonction du sens de la comparaison entre le signal d'entrée et la valeur seuil.

Si l'on considère la tension VR, d'amplitude variable, aux bornes du transformateur 3 représentée sur la figure 3B, quand elle polarise positivement la grille 12, la grille 15 est polarisée négativement et inversement. Ainsi, dans les phases de conduction respectives, la tension de la grille 12, V12+, recopie VR+ ou une fraction de VR+ et la tension de la grille 15, V15+, recopie VR- ou une fraction de VR- en valeur absolue. A une tension VR+ positive et maximale (ou minimale) correspond une fraction de VR+ (ou toute la tension VR+) sur la grille 12. A une tension VR- minimale (ou maximale) correspond toute la tension VR- (ou une fraction de VR-) positive sur la grille 15, comme visible sur la figure 3C.

Les tensions sont donc optimisées sur les grilles avec un contrôle actif et sans tension négative significative. Cependant ce type de circuit de protection est encombrant et complexe.

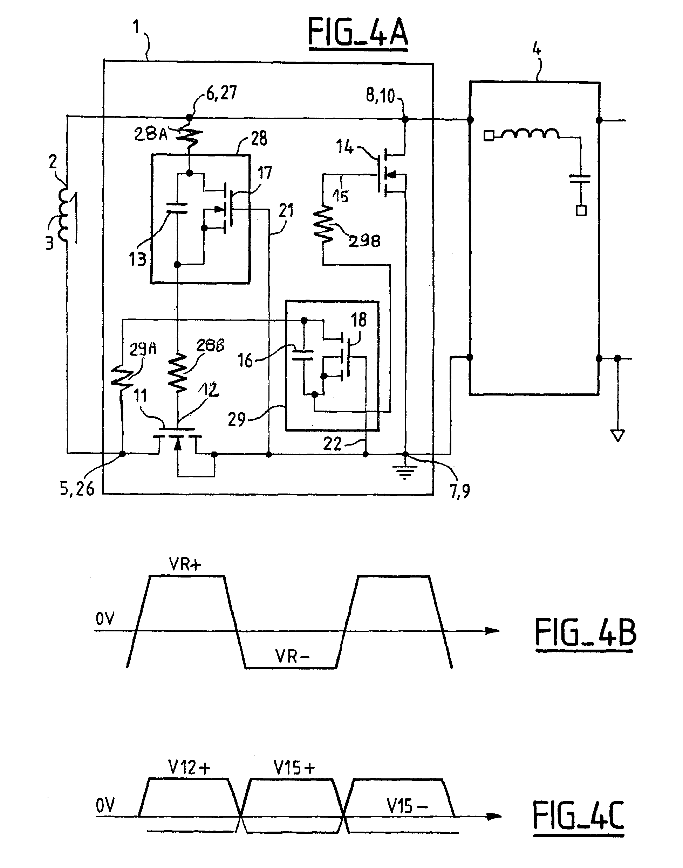

Le redresseur conforme à un premier mode de réalisation de l'invention est décrit sur la figure 4A.

Ledit redresseur synchrone auto-commandé 1 est monté entre le secondaire d'un transformateur 3 et un filtre LC 4.

Plus particulièrement, le redresseur synchrone auto-commandé 1, dans le cas asymétrique, comprend une première et une seconde entrées de redresseur 26, 27 connectées à une première et une seconde extrémités de transformateur 5, 6 de l'enroulement secondaire 2 de transformateur 3 et une première et une seconde sorties de redresseur 9, 10 connectées à une première et une seconde entrées de filtre 7, 8 du filtre LC 4. La seconde sortie de redresseur 10 est connectée à la seconde entrée de redresseur 27.

Le redresseur synchrone auto-commandé comprend classiquement :
- un transistor MOSFET direct 11 connecté entre la première entrée de redresseur 26 et la première sortie de redresseur 9 ; la connexion de grille 12 du transistor MOSFET 11 est connectée à la seconde entrée de redresseur 27 ; cette connexion de grille 12, contenant ou non une impédance, est montée en série avec un diviseur de tension 13,
- un transistor MOSFET de roue libre 14 connecté entre la première sortie de redresseur 9 et la seconde sortie de redresseur 10 ; la connexion de grille 15 du transistor MOSFET de roue libre 14 est connectée à la première entrée de redresseur 26; cette connexion de grille 15, contenant ou non une impédance, est montée en série avec un diviseur de tension 16.

Selon l'invention, chaque circuit de protection de grille 28, 29 comprend un élément diviseur 13, 16, monté en parallèle avec un interrupteur électronique 17, 18 ayant une position ouverte et une position fermée. Ce diviseur 13, 16 constitue avec le condensateur intrinsèque, ou l'impédance placée entre grille et source du MOS, un pont diviseur non dissipatif.

Ledit circuit de protection peut être raccordé au redresseur à travers un second diviseur placé en série avec le premier.

Conformément à ce premier mode de réalisation, le dispositif actif 17, 18 est un MOSFET de signal dont la grille 21, 22 est connectée, directement ou à travers une impédance faible, au point commun des sources des MOSFETs de puissance (ici, point 7 du redresseur 1). Cet élément actif 17, 18 est monté en parallèle avec le diviseur 13, 16, qui peut être composé de plusieurs éléments câblés en série, et la source dudit élément actif est reliée à la grille 12, 15 des MOSFETs de puissance 11, 14 à travers l'impédance 28B et 29B. L'élément actif 17, est associé au MOSFET direct 11 et l'élément actif 18 contrôle la grille du MOSFET de roue libre 14.

Chaque impédance série 28A, 28B, 29A, 29B peut être remplacée par un court-circuit. Dans la suite du texte les éléments 28A, 28B, 28C, 29A, 29B, 29C sont assimilés à des court-circuits sans que cela intervienne dans le principe décrit.

Le fonctionnement du redresseur selon le premier mode de réalisation de l'invention est le suivant:

Dans le palier positif du signal VR, c'est le transistor MOSFET direct 11 qui est commandé pour conduire et le transistor MOSFET de roue libre 14 est maintenu bloqué. D'une part, l'élément actif 17 est bloqué (sa source 12 est plus haute en tension que sa grille 21), cela permet de limiter, si nécessaire, la tension positive sur la grille 12 et d'autre part la grille du MOSFET de roue libre 14 tend à se polariser négativement, par rapport à sa source, et entraîne la source du MOSFET de signal 18 qui se met à conduire dès que son seuil de conduction Vgth est atteint.

Dans le palier négatif du signal VR, le MOSFET de roue libre 14 conduit et l'élément actif 18 est bloqué permettant de limiter, si nécessaire, la tension positive sur la grille 15. C'est aussi la phase de blocage du MOSFET direct 11, sa grille 12 tend à se polariser négativement, par rapport à sa source, et entraîne la source du MOSFET de signal 17 qui se met à conduire dès lors que son seuil de conduction Vgth est atteint.

Cette commutation douce des MOSFETs de signal 17, 18 limite les tensions négatives de grille 12, 15 des MOSFETs 11, 14 à Vgth indépendante de la tension d'entrée.

Si l'on considère la tension VR, d'amplitude variable, aux bornes du transformateur 3 représentée sur la figure 4B, quand elle polarise positivement la grille 12, la grille 15 est polarisée négativement et inversement. Ainsi, dans les phases de conduction respectives, la tension de la grille 12, V12+, recopie une fraction de VR+ et la tension de la grille 15, V15+, recopie une fraction de VR- en valeur absolue. A une tension VR+ positive et maximale (ou minimale) correspond une fraction de VR+ maximale (ou minimale) sur la grille 12. A une tension VR- minimale (ou maximale) correspond une fraction de VR- minimale (ou maximale) positive sur la grille 15. Les tensions de grilles inverses V12- et V15- sont négatives mais limitées à Vgth, comme visible sur la figure 4C.

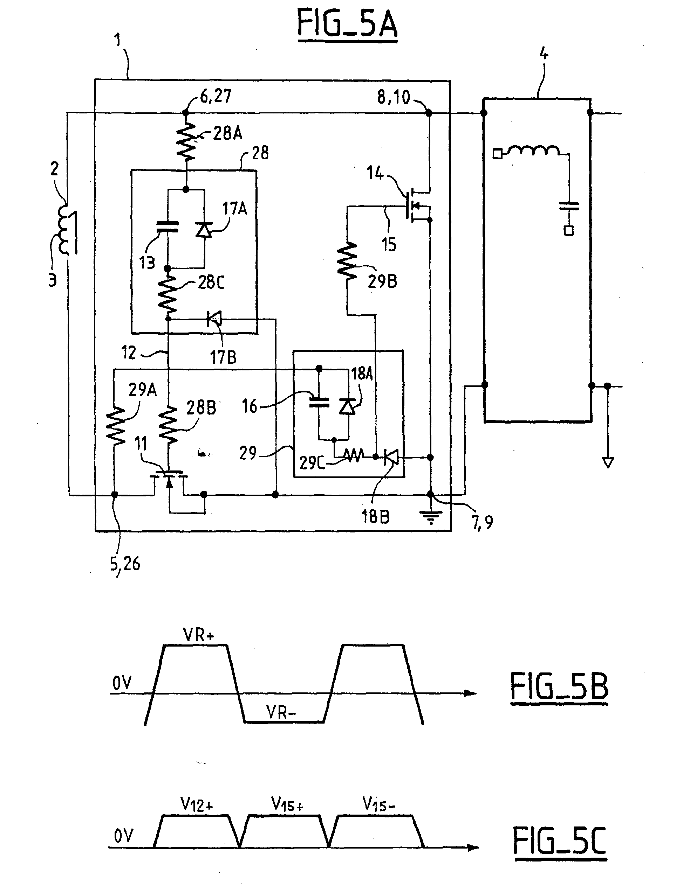

Le redresseur conforme à un second mode de réalisation de l'invention est décrit sur la figure 5A.

Seuls les circuits de protection 28 et 29 ici différents sont décrits.

Selon l'invention, chaque circuit de protection de grille 28, 29 comprend un élément diviseur 13, 16, monté en parallèle avec une première diode 17A, 18A. Ce diviseur 13, 16 peut être composé de plusieurs éléments câblés en série et il constitue avec le condensateur intrinsèque, ou l'impédance placée entre grille et source du MOS, un pont diviseur non dissipatif.

Ledit circuit de protection peut être raccordé au redresseur à travers un second diviseur placé en série avec le premier.

Cette première diode 17A, 18A est donc reliée par l'une de ses bornes, directement ou à travers une faible impédance 28A, 29A, à la première ou seconde extrémité de transformateur 5, 6 et par l'autre de ses bornes, directement ou à travers les faibles impédances 28B, 28C, 29B, 29C, à la grille du MOSFET de puissance associé 11, 14.

L'élément limiteur comprend également une seconde diode 17B, 18B montée, directement ou à travers une faible impédance 28B, 29B, en parallèle entre la source et la grille du MOSFET de puissance associé 11. De préférence, la première diode 17A, 18A est une diode de signal et la seconde diode 17B, 18B est une diode de protection permettant de limiter la tension directe sur la grille des transsistors de puissance MOSFETs 11, 14 dans les régimes transitoires.

Les impédances série 28A, 28B, 28C, 29A, 29B, 29C étant supposées négligeables, le fonctionnement du redresseur selon ce second mode de réalisation est le suivant:

Dans le palier positif du signal VR, c'est le transistor MOSFET direct 11 qui est commandé pour conduire et le transistor MOSFET de roue libre 14 est maintenu bloqué. D'une part, l'élément limiteur 17A, 17B est bloqué, cela permet de limiter, si nécessaire, la tension positive sur la grille 12 et d'autre part la grille du MOSFET de roue libre 14 tend à se polariser négativement, par rapport à sa source, et entraîne la seconde diode 18B qui se met à conduire dès que son seuil de conduction Vf est atteint.

Dans le palier négatif du signal VR, le MOSFET de roue libre 14 conduit et l'élément limiteur 18A, 18B est bloqué permettant de limiter, si nécessaire, la tension positive sur la grille 15. C'est aussi la phase de blocage du MOSFET direct 11, sa grille 12 tend à se polariser négativement, par rapport à sa source, et entraîne la seonde diode 17B qui se met à conduire dès lors que son seuil de conduction Vf est atteint.

Cette commutation des diodes 17B et 18B limite les tensions de grille 12, 15 des MOSFETs 11, 14 à Vf égale à une tension directe de diode indépendante de la tension d'entrée.

La conduction de la première diode 17A, 18A assure une limitation de la tension aux bornes de l'élément diviseur 13, 16 à un seuil égal à une tension directe de diode.

Si l'on considère la tension VR, d'amplitude variable, aux bornes du transformateur 3 représentée sur la figure 5B, quand elle polarise positivement la grille 12, la grille 15 est polarisée négativement et inversement. Ainsi, dans les phases de conduction respectives, la tension de la grille 12, V12+, recopie une fraction de VR+ et la tension de la grille 15, V15+, recopie une fraction de VR- en valeur absolue. A une tension VR+ positive et maximale (ou minimale) correspond une fraction de VR+ maximale (ou minimale) sur la grille 12. A une tension VR- minimale (ou maximale) correspond une fraction de VR- minimale (ou maximale) positive sur la grille 15. Les tensions de grilles inverses V12- et V15- sont négatives mais limitées à Vf, comme visible sur la figure 5C.

L'invention décrite réalise une protection dynamique par commutation naturelle des diodes, dans la phase de blocage des MOS de puissance, permettant de réduire sensiblement les pertes de commutation notamment celles dues aux conductions simultanées inhérentes au redressement synchrone auto-commandé. Cette protection peut s'appliquer à un seul des éléments de puissance commandés.

Bien entendu, l'invention n'est pas limitée aux modes de mise en oeuvre de réalisation décrits et représentés, mais elle est susceptible de nombreuses variantes accessibles à l'homme du métier sans que l'on s'écarte de l'invention. Notamment les redresseurs synchrones utilisés peuvent être en transfert d'énergie symétrique ou asymétrique. Les éléments de commutation sont câblés suivant les règles de l'art de redresseur à MOSFET en topologie de transfert direct d'énergie symétrique.

L'invention inclut notamment, toutes les utilisations combinées des réalisations décrites, associées ou non à tous les moyens connus de diviseur de tension de grille et tous les moyens connus de couplage capacitif. En outre, l'une ou l'autre réalisation, ou la combinaison des deux peut être appliquée à un seul ou aux deux éléments de puissance à protéger.

Les raccordements des grilles des éléments actifs 17, 18 peuvent être reliées à un référentiel différent des sources des MOSFET de puissance 11, 14 ( tension plus négative que lesdites sources, sortie d'une porte électronique, ...). La présence d'une impédance appropriée dans ces liaisons de grilles n'est pas de nature à modifier l'invention. Il en est de même pour la mise en parallèle de diodes diverses aux bornes des éléments diviseurs 13, 16 ou entre grille et source du composant de puissance 11, 14.

Les transistors MOSFETs 11, 14 et le circuit protection 28, 29 peuvent être raccordés à un autre enroulement, simultanément ou séparément, du même transformateur ou d'un autre.

Ces modes de réalisation s'appliquent également à un redresseur synchrone auto-commandé dans lequel l'un des éléménts de puissance est une diode.

## Revendications

1. Circuit de protection de grille (28, 29) d'un transistor MOSFET de puissance (11, 14), **caractérisé en ce qu'**il comprend un transistor MOS (17, 18) ayant un seuil de conduction en tension faible dont la commande est obtenue par le câblage grille-source dudit transistor, la source étant raccordée à la grille du MOSFET de puissance (11, 14) associé et montée en parallèle avec un élément diviseur et la grille étant raccordée à la source du MOSFET de puissance (11, 14) associé.

2. Redresseur synchrone auto-commandé connecté entre un enroulement secondaire de transformateur (3) ayant une première et une seconde extrémités de transformateur (5, 6), et un filtre LC (4) ayant une première et une seconde entrée de filtre (7, 8), ledit redresseur synchrone auto-commandé comprenant :
- une première et une seconde entrée de redresseur (26, 27) connectées respectivement à la première et la seconde extrémité de transformateur (5, 6)
- une première et une seconde sortie de redresseur (9, 10), la seconde sortie de redresseur (10) étant connectée à la seconde entrée de redresseur (27),
- un transistor MOSFET direct (11), ou tout élément à commande en tension, connecté entre la première entrée de redresseur (26) et la première sortie de redresseur (9) et ayant une connexion de grille (12),
- un transistor MOSFET de roue libre (14), ou tout élément à commande en tension, connecté entre la première sortie de redresseur (9) et la seconde sortie de redresseur (10) et ayant une connexion de grille (15),
au moins l'une des connexions de grille (12, 15) étant connectée à une entrée de redresseur à travers un circuit de protection de grille (28, 29),
**caractérisé en ce que** ledit circuit de protection de grille (28, 29) comprend un transistor MOS (17, 18) ayant un seuil de conduction en tension faible dont la commande est obtenue par le câblage grille-source dudit transistor, la source étant raccordée à la grille du MOSFET de puissance (11, 14) associé et montée en parallèle avec un élément diviseur et la grille étant raccordée à la source du MOSFET de puissance (11, 14) associé.

3. Circuit de protection de grille (28, 29) d'un transistor MOSFET de puissance (11, 14), **caractérisé en ce qu'**il comprend deux diodes ayant un seuil de conduction en tension faible, une première diode (17A, 18A) étant raccordée à la grille MOSFET de puissance (11, 14) associé et montée en parallèle avec un élément diviseur et une seconde diode (17B, 18B) étant montée en parallèle entre la source et la grille du MOSFET de puissance (11, 14) associé.

4. Circuit de protection selon la revendication 3, **caractérisé en ce que** ladite première diode (17A, 18A) est une diode de signal et ladite seconde diode (17B, 18B) est une diode de protection.

5. Redresseur synchrone auto-commandé connecté entre un enroulement secondaire de transformateur (3) ayant une première et une seconde extrémités de transformateur (5, 6), et un filtre LC (4) ayant une première et une seconde entrée de filtre (7, 8), ledit redresseur synchrone auto-commandé comprenant :
- une première et une seconde entrée de redresseur (26, 27) connectées respectivement à la première et la seconde extrémité de transformateur (5, 6)
- une première et une seconde sortie de redresseur (9, 10), la seconde sortie de redresseur (10) étant connectée à la seconde entrée de redresseur (27),
- un transistor MOSFET direct (11), ou tout élément à commande en tension, connecté entre la première entrée de redresseur (26) et la première sortie de redresseur (9) et ayant une connexion de grille (12),
- un transistor MOSFET de roue libre (14), ou tout élément à commande en tension, connecté entre la première sortie de redresseur (9) et la seconde sortie de redresseur (10) et ayant une connexion de grille (15),
au moins l'une des connexions de grille (12, 15) étant connectée à une entrée de redresseur à travers un circuit de protection de grille (28, 29),
**caractérisé en ce que** ledit circuit de protection de grille (28, 29) comprend deux diodes ayant un seuil de conduction en tension faible, une première diode (17A, 18A) étant raccordée à la grille du MOSFET de puissance (11, 14) associé et montée en parallèle avec un élément diviseur et une seconde diode (17B, 18B) étant montée en parallèle entre la source et la grille du MOSFET de puissance (11, 14) associé.

6. Redresseur synchrone auto-commandé selon la revendication 5, **caractérisé en ce que** ladite première diode (17A, 18A) est une diode de signal et ladite seconde diode (17B, 18B) est une diode de protection.

7. Redresseur synchrone auto-commandé selon l'une quelconque des revendications 2 à 5, **caractérisé en ce que** ledit câblage comporte des impédances série.

8. Redresseur synchrone auto-commandé selon l'une quelconque des revendications 2 à 5, **caractérisé en ce que** ledit circuit de protection est raccordé au redresseur à travers un second diviseur placé en série avec le premier.

9. Redresseur synchrone auto-commandé selon l'une quelconque des revendications 2 à 5, **caractérisé en ce que** le redresseur (1) est câblé sur un secondaire de transformateur à point milieu.

10. Redresseur synchrone auto-commandé selon l'une quelconque des revendications 2 à 5, **caractérisé en ce qu'**il comporte un élément de puissance qui est une diode.
